# EUROPEAN PATENT APPLICATION

(11) **EP 4 489 290 A1**
(43) Date of publication of application: **08.01.2025**
(21) Application number: 23275099.2
(22) Date of filing: 03.07.2023
(51) Int. Cl.: H02P 3/02, H02P 3/22

(54) **EROTOR LOCK FOR EVTOL LIFTERS**

(71) Applicant: Hamilton Sundstrand Corporation, Charlotte, NC 28217 (US)
(72) Inventor: ROADLEY-BATTIN, Jonathan Mark, Solihull B90 4SS (GB)
(74) Representative: Dehns

(57) **Abstract**

There is disclosed an electronic rotor "lock" that can be implemented within an electric motor system by selecting closing a subset of switches within an inverter (200) of the motor drive system to create a circulatory current path that can generate a force that acts to oppose any external movement of the rotor (12).

## Description

### TECHNICAL FIELD

The technology described herein relates to power electronics, and in particular to the operation of a power inverter as part of a motor drive system to provide an electronic lock that acts to oppose external rotation of the rotor load that is connected to the motor drive system. In some embodiments, the electronic lock is used for locking the lifter propellers for electric vertical take-off and landing (eVTOL) aircraft, although other arrangements are contemplated.

### BACKGROUND

In aircraft, there is currently a trend towards increased electrification whereby aircraft loads, such as flight control surfaces, landing gear, actuators, fans, pumps etc. which have traditionally been controlled by hydraulic and mechanical systems are now being designed to be controlled electrically by means of an electric motor. A particular example of aircraft electrification is electric vertical take-off and landing (eVTOL) aircraft in which electric power is used to control the aircraft to hover, take off, and land vertically. A typical eVTOL may thus comprise a number of rotors that may each be driven by a respective electric motor such that the different rotors can be independently controlled, as desired, e.g. depending on the flight stage.

The Applicants believe there remains scope for improved electric motor system operation.

### SUMMARY

According to a first aspect of the technology described herein there is provided a method of operating an electric motor system, wherein the electric motor system comprises a motor comprising a rotor having a magnet mounted thereto and an electric circuit that comprises one or more stator windings for driving rotation of the rotor, the electric circuit further comprising an inverter comprising an arrangement of switches that can be selectively operated to control an operation of the electric motor system, the method comprising: locking the rotor at a certain position by closing a subset of switches from the arrangement of switches within the power inverter to provide a circulatory current flow path within the power inverter such that in response to external movement of the rotor, the current flowing in the circulatory current flow path within the power inverter will generate an opposing force to oppose the movement of the rotor.

According to a second aspect of the technology described herein there is provided an electric motor system comprising: a motor comprising a rotor having a magnet mounted thereto; an electric circuit that comprises one or more stator windings for driving rotation of the rotor when the stator windings receive an input voltage from an electrical power supply, the electric circuit further comprising an inverter comprising an arrangement of switches that can be selectively operated to control an operation of the electric motor system; and a control circuit, wherein the control circuit is configured to, when it is desired to lock the rotor at a certain position: close a subset of switches from the arrangement of switches within the power inverter to provide a circulatory current flow path within the power inverter such that in response to external movement of the rotor, the current flowing in the circulatory current flow path within the power inverter will generate an opposing force to oppose the movement of the rotor.

The technology described herein also extends to a computer readable medium (in an embodiment a non-transitory computer readable medium) storing instructions that when executed by a processor cause the processor to perform a method substantially as described herein according to any embodiments of the technology described herein.

According to the above arrangements the inverter can thus be (and is) operated to close a subset of switches to provide a circulatory current flow path that allows current to flow via the stator into the power inverter to generate an opposing force to oppose the movement of the rotor. The effect of this is that the electric motor system can thus be selectively operated to implement an electronic parking "lock" when it is desired to lock the rotor at a certain, e.g. desired, e.g. predefined, position (i.e. a certain, e.g. desired, e.g. predefined, rotor angle). This then saves the need for providing an additional mechanical lock and/or providing a more complex dynamic control to keep the rotor at the desired position. This can therefore provide various benefits compared to other possible approaches.

Thus, when it is desired to drive the rotor in rotation, the inverter may accordingly be used to control the rotation, e.g. in the normal manner for an electric motor. However, when it is desired to "lock" the rotor, the inverter may then be operated to implement the electronic lock, as described above. The locking operation may be triggered in any suitable and desired manner. For example, the locking operation may be, and in embodiments is, triggered in response to receiving a suitable 'locking' signal. This signal may be suitably generated according to any certain conditions, e.g. depending on the overall system within which the electric motor is being used. For instance, when the motor is used to drive a lifter in an electric vertical take-off and landing (eVTOL) aircraft, as will be explained further below, the locking operation may be triggered in response to the aircraft transitioning to a forward motion flight phase, e.g., which may in response to detecting that a desired altitude has been reached, such that the lifting flight phase can be terminated. Various other arrangements would however of course be possible depending on the system in question.

For example, it may also be desirable to "lock" the propellers and/or lift rotors of an eVTOL aircraft when the aircraft is parked on the ground. For instance, it may be desired to align the rotors in a certain direction (e.g. forward facing) to reduce the footprint of the eVTOL whilst parked. This may also help reduce the risk of damage to the rotors. Thus, the locking operation could also be triggered in response to the aircraft entering a "parked" configuration.

Thus, according to the technology described, the inverter is used to implement an electronic parking "lock", in order to hold the rotor at a certain, e.g. desired, e.g. predefined, position (in contrast to providing a brake system, for example, where the rotor motion may need to be stopped but there is no need or desire to hold the rotor at any particular position).

The subset of switches that are closed to provide the circulatory current flow path may be any suitable and desired subset of switches that can provide a suitable circulatory current flow path within the power inverter. For instance, in a typical power inverter arrangement, and in embodiments of the technology described herein, the power inverter may comprise an arrangement of upper level switches and an arrangement of lower level switches, and the method may comprise (the control circuit) either closing all of the upper level switches whilst leaving the lower level switches open or closing all of the lower level switches whilst leaving the upper level switches open. Other arrangements may however be possible depending on the specific inverter topology so long as a suitable circulatory current flow path can be provided within the power inverter.

In some cases, the rotor may not initially be in the desired position at the point at which it is desired to lock the rotor. Thus, in embodiments, when it is desired to lock the rotor at a certain position, the method comprises (the control circuit) first moving the rotor to the desired position, e.g. by using the motor drive system as a servomotor, and then implementing the electronic lock as described above.

In embodiments, the motor is designed and/or arranged to enhance the locking effect. For example, the motor may comprise a stator having a plurality of stator teeth around which the stator windings are mounted. In that case, the desired position at which the rotor is locked is in embodiments a position where the rotor is aligned with at least one of the stator teeth. This has been found to provide an enhanced lock. Various other arrangements would be possible in this regard.

In embodiments, as mentioned above, the motor drive system may be used within an aircraft. For example, in an embodiment, the motor drive system is used in an electric vertical take-off and landing (eVTOL) aircraft comprising one or more propellers arranged to rotate to provide thrust, to lock the propellers in a certain orientation.

In a particular embodiment, the motor drive system is used to control the lifter propellers in a lifter-pusher electric vertical take-off and landing (eVTOL) aircraft. In that case, during phases of forward motion (using the pusher propeller), the technology described herein may be used to lock the lifter propellers in a certain, e.g. desired, orientation, e.g., aligned with the direction of forward motion to reduce drag. In this context it may be particularly beneficial to avoid the need for a mechanical lock for keeping the lifter propellers in their desired alignment as this may add unwanted weight and/or bulk to the system.

In embodiments, as mentioned above, the motor drive system may also be used to control the propellers in an electric vertical take-off and landing (eVTOL) aircraft during phases of when the eVTOL is stationary (e.g. when parked on the ground). For example, the technology described herein may be used to lock the propellers of the eVTOL in a certain, e.g. desired, orientation, e.g., aligned with the longitudinal direction of the aircraft, to reduce (e.g. minimise) the footprint of the eVTOL.

Various other arrangements and applications are however contemplated and the technology described herein may generally find utility in any suitable situation in which an electronic lock may desirably be implemented.

### BRIEF DESCRIPTION OF DRAWINGS

Various embodiments will now be described, by way of example only, with reference to the drawings.
Figure 1 is a schematic diagram of an electric vertical take-off and landing (eVTOL) aircraft having a lifter and pusher architecture.
Figure 2 shows how the lifter propellers may be locked for periods of forward motion.
Figure 3 shows an example of a two-level three-phase power inverter that may be used to drive the lifter propellers according to an embodiment.
Figure 4 shows the operation of the power inverter to create an electronic "lock" according to an embodiment.
Figure 5 shows further details of the motor arrangement according to an embodiment.
Figure 6 shows another example of the operation of a power inverter to create an electronic "lock" according to an embodiment.
Figure 7 shows another example of the operation of a power inverter to create an electronic "lock" according to an embodiment.

### DETAILED DESCRIPTION

Various embodiments will now be described in the content of electric vertical take-off and landing (eVTOL) aircraft.

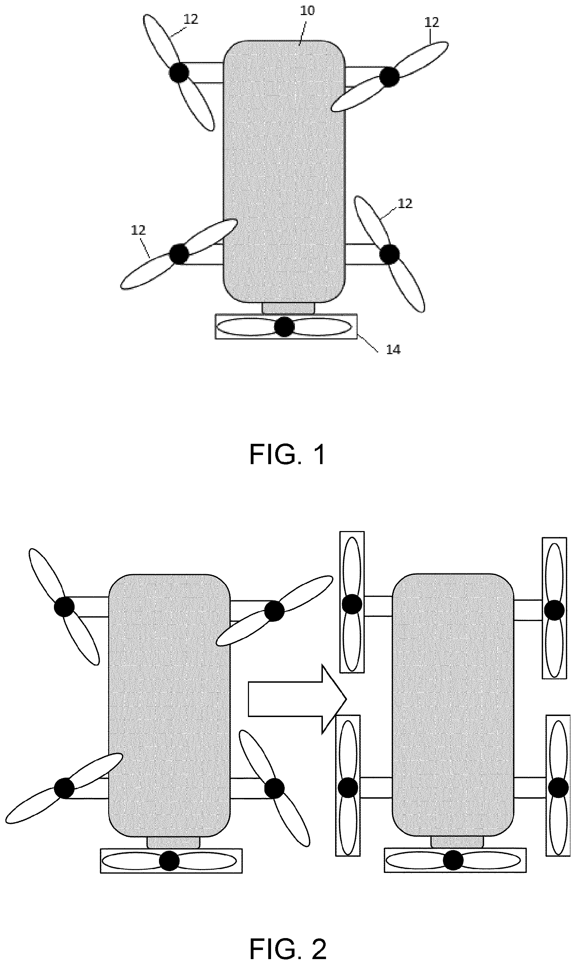

For example, Figure 1 shows an example of an electric vertical take-off and landing (eVTOL) aircraft 10 having a lifter and pusher architecture where four vertical lift rotors 12 are provided along the length of the aircraft (the lifters), along with a dedicated rear propeller 14 for providing forward thrust (the pusher). The lifters 12 are thus operable to, and configured to, rotate within the plane of Figure 1 in order to provide vertical thrust. On the other hand, the pusher 14 is operable to, and configured to, rotate into the plane of Figure 1 in order to provide horizontal (forward) thrust. In the present example each lifter 12 and pusher 14 is connected to a respective electric motor for driving its respective rotation. That is, the lifters 12 and pusher 14 may be, and in the present example can be, controlled independently of each other.

In the example shown in Figure 1, during lift-off, the lifters 12 should thus be driven appropriately to provide the desired vertical lift-off. The pusher propeller 14 should then be driven when it is desired to provide forward motion.

Figure 2 shows in particular the desired alignment of the lifters 12 and pusher 14 for a transition to a forward-motion flight phase. Thus, as shown in Figure 2, after the aircraft 10 has been lifted to a desired altitude, using the lifters 12, the lifters 12 are in the present example desirably then "locked" in position with the lifter blades aligned with the direction of forward motion to reduce drag. Once the lifters 12 have been suitably locked in position, the pusher 14 can then be (and is) operated accordingly to provide the desired forward thrust.

It will be understood that there may also be other situations where it is desired to lock at least some of the rotors to a desired position. For example, this may be desirable whilst the eVTOL is parked on the ground. Likewise, it will be appreciated that the technology described herein is also generally applicable to alternative eVTOL configurations. For instance, eVTOL configurations where there is no pusher propeller and forward thrust is provided by pitching the lifters, or "tilt-wing" eVTOLs which have nacelles to facilitate VTOL operation, in which case there may be any suitable rotor that may desirably be locked (at any suitable position).

It will also therefore be appreciated that Figure 1 merely shows an example of a suitable eVTOL architecture and various other arrangements would be possible. For example, the arrangement and number of lifter and pusher propellers may generally be selected as desired and is not limited to what is shown in Figure 1. Similarly, it is also possible that multiple ones of the lifters 12 and pusher 14 (e.g. a given pair of lifters 12) may share a common electric motor such that they can be operated in sync. Various arrangements would be possible in this regard.

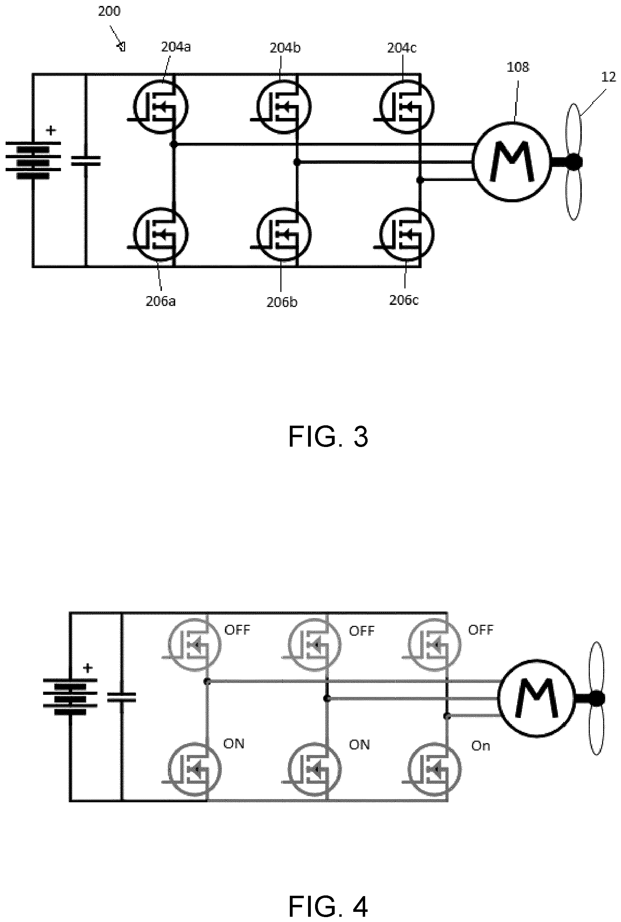

Figure 3 shows an example of a two-level three-phase inverter circuit 200 that could be used to drive any one of the respective lifter and pusher propellers of the aircraft in Figure 1 (and in embodiments each of the respective lifter and pusher propellers has a similar motor drive system including such two-level three-phase inverter circuit 200). Thus, as shown in Figure 3, the inverter outputs (phases) are operably connected to the windings 202a which are wound about a permanent magnetic motor 108. The motor 108 is then used to drive the rotor as desired.

The inverter circuit 200 in Figure 3 comprises six switches, including three top switches 204a,b,c and three bottom switches 206a,b,c. Each switch 204/206 may be connected in parallel with a respective freewheeling diode (not shown). The switches 204/206 can then be selectively operated to control rotation of the rotor, e.g. to control the motor speed/frequency, e.g. in the normal manner for a switching inverter.

Figure 4 shows the operation of the inverter circuit 200 according to an embodiment when it is desired to produce an electronic "lock" that holds the rotor in a certain position (e.g. to align the lifter propellers with the forward motion, as shown in Figure 2). In this case, all of the bottom switches 206a,b,c are closed (commanded 'on'), whilst the top switches 204a,b,c are left open (commanded 'off' such that there is no current flow across any one of the top switches). As shown in Figure 4, this then creates a circulatory current flow path through the stator windings and the bottom switches 206a,b,c, essentially shorting the stator windings. In response to an external force that is applied to the rotor 12, a current will thus be generated in the stator windings that acts to generate a magnetic field and thus force (torque) which will oppose the movement of the rotor 12, thus effectively locking the rotor 12 in position.

Thus, according to the technology described herein, an electronic "lock" is provided. This then allows a more efficient eVTOL operation, since the lifters 12 can then be locked when desired at a certain position, to reduce drag, without having to provide a mechanical lock (as may be more conventionally done, but which may undesirably increase weight/bulk of the aircraft) and without having to perform a dynamic control (which may require higher energy costs). In this respect it will be appreciated that locking the lifters 12 in the desired orientation helps provide an improved flight control but is not generally safety critical. Thus, using the existing inverter circuit 200 to provide an electronic "lock" (i.e. to try to lock the lifters 12 at a desired position) can work particularly efficiently.

Another benefit here is that an effective electronic "lock" can be implemented with no additional power requirements. For instance, the arrangement of switches within the inverter circuit 200 will be controlled by a suitable control circuit that takes power from an external bus (e.g. a 28V DC bus for typical avionic applications). In that respect, setting the switches on or off draws the same amount of power. Thus, commanding a certain subset of switches on (i.e. closing those switches) in order to implement the electronic "lock" does not require any additional power compared to commanding all of the switches off (as may otherwise more conventionally be done in such situations as the inverter circuit 200 is not being used to drive the lifters 12 and so the switches may otherwise be switched off). This also means that no power needs to be drawn from the inverter circuit 200 battery as once the subset of switches has been closed to implement the electronic "lock", there is then no further active power requirement.

Thus, the technology described herein may provide various improvements compared to other possible approaches, e.g., in particular, compared to approaches where the lifters 12 can be (and are) mechanically "locked" in place for the duration of the forward flight.

As described above, the motor drive system can be selectively operated to implement an electronic "lock". In embodiments, the motor drive system may therefore be designed to a higher current capacity to allow higher opposing forces to be generated, and hence to allow a stronger locking mechanism. That is, the skilled person will understand that various characteristics of the motor drive system may be selected or designed based on the desired application of the motor drive system. Thus, the skilled person may design the motor drive system to implement a stronger locking mechanism.

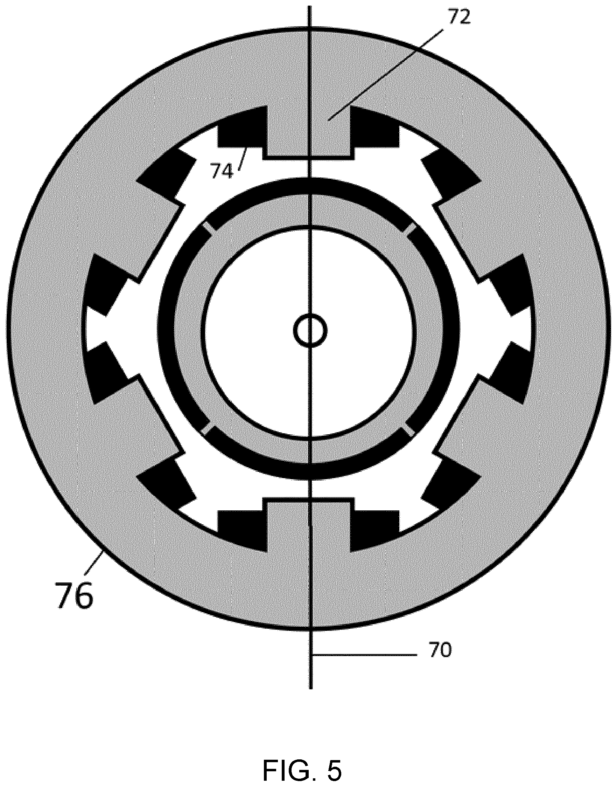

For example, in some embodiments, the motor is installed within the aircraft 10 such that the 'zero' position (i.e. the position at which the rotor is desired to be locked) aligns with the position of one of the stator teeth. This is shown for example in Figure 5 which shows an example of a motor arrangement including a stator 76 that includes a plurality of stator teeth 72. As shown in Figure 5, the stator teeth provide mounting for the respective stator phases (windings) 74. The rotor that carries the magnet is positioned to rotate within the stator 76. According to an embodiment, the motor may therefore be installed and oriented such that the desired "lock" position is a position at which the magnet carried by the rotor is aligned with a pair of stator teeth. This can therefore enhance the electronic locking mechanism, taking advantage of the rotor's tendency to align with the stator teeth. For example, the interaction between the permanent magnets of the rotor and the stator teeth can generally introduce so-called "cogging" torque. This torque is undesirable for normal operation of a permanent magnetic motor. However, in embodiments, this interaction may be exploited in order to improve the locking effect. Thus, in some embodiments, the motor may be designed to increase the "cogging" torque to enhance the locking effect.

Various other arrangements would be possible in this regard.

The control circuit (circuitry) for the electric motor system may be implemented in any suitable manner, as desired. For example, this may be implemented either in hardware or software (including embedded software), as desired, using any suitable processor or processors, controller or controllers, functional units, circuitry, processing logic, microprocessor arrangements, etc., that are operable to perform the various functions, etc., such as appropriately dedicated hardware elements (processing circuitry) and/or programmable hardware elements (processing circuitry) that can be programmed to operate in the desired manner.

The methods in accordance with the technology described herein may thus be implemented at least partially using software e.g. embedded software. The controller may thus comprise a suitable microprocessor or microcontroller that is configured to execute software to perform the various operations described herein.

It will thus be seen that when viewed from further embodiments the technology described herein provides software specifically adapted to carry out the methods herein described when installed on a suitable data processor, a computer program element comprising software code portions for performing the methods herein described when the program element is run on a data processor, and a computer program comprising code adapted to perform all the steps of a method or of the methods herein described when the program is run on a data processing system.

Other arrangements would however be possible. For instance, the methods may also be implemented at least partially using appropriately dedicated hardware elements (processing circuitry) and/or programmable hardware elements (processing circuitry, e.g. such as a programmable FPGA (Field Programmable Gate Array)) that form part of the motor controller and can be programmed to operate in the desired manner. It would also be possible to implement the methods described above using analogue logic, for example.

Subject to the requirements of the technology described herein, the motor system may otherwise comprise any suitable and desired features that a permanent magnet motor system may comprise.

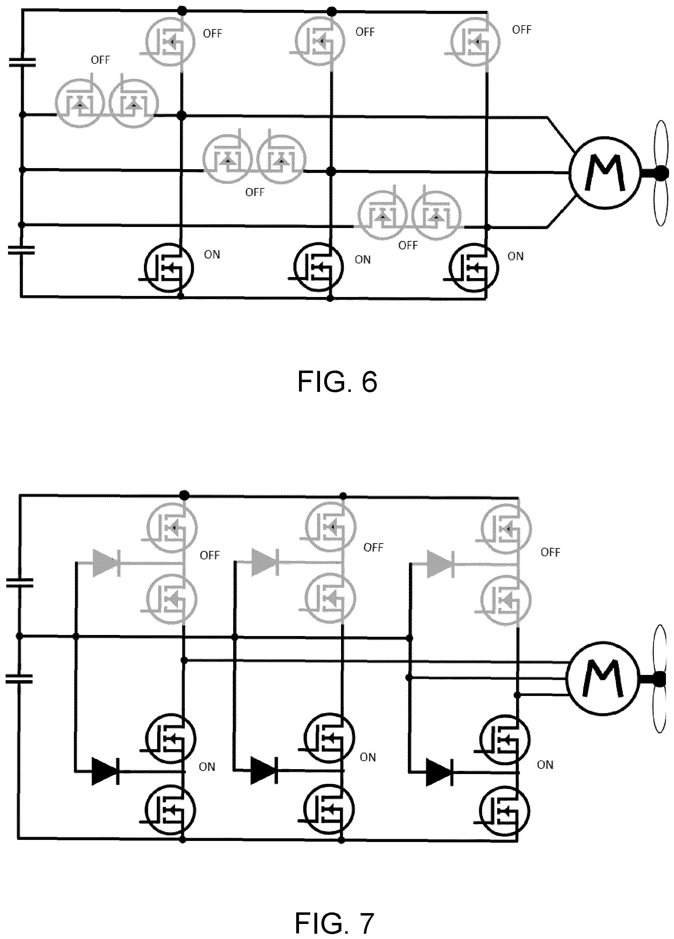

Thus, whilst the above examples have been provided primarily with reference to example two-level three-phase inverter topologies, embodiments of the invention extends to other configurations of inverter topologies, including but not limited to different-phase topologies (such as 1, 2, 3, 4, 5 etc.-phase topologies) and multiple three-phase topologies (such as 3, 6, 9, etc.-phase topologies). For instance, so long as there is a suitable arrangement of switches a subset of which can be closed to create a suitable circulatory current path for implementing the electronic "lock" in the manner described above, any suitable and desired inverter topology may be used. Thus, the technology described herein may also be implemented using various other inverter topologies, such as T-type inverter, a H-bridge, or any other suitable and desired inverter topology. For example, Figure 6 shows a suitable electronic "lock" implementation for a T-type inverter. Figure 7 then shows a suitable electronic "lock" implementation for an NPC (neutral point clamped) type inverter. Various other arrangements would be possible. In each case, it will be understood that the number of components such as switches and freewheeling diodes may be varied accordingly.

It will be further understood that while the above embodiments of the present invention have been described with reference to a single level inverter that provides power directly to the windings of a motor, the inverter may instead be incorporated into a multi-level system and instead be configured to receive and/or provide AC output current to another or other inverter(s).

Additionally, while the above examples have been provided primarily with reference to a single channel system, embodiments of the invention further extend to permanent magnet motor drive systems with different numbers of inverters and/or channels, including but not limited to dual channel, triple channel, etc. motor drive systems. For instance, it may be the case that two or more channels are provided for each motor drive system, e.g. for redundancy, and that there may in general be any suitable number of channels provided

Variations on the examples described above fall within the scope of the claims.

## Claims

1. A method of operating an electric motor system, wherein the electric motor system comprises a motor comprising a rotor having a magnet mounted thereto and an electric circuit that comprises one or more stator windings for driving rotation of the rotor, the electric circuit further comprising an inverter comprising an arrangement of switches that can be selectively operated to control an operation of the electric motor system, the method comprising:
locking the rotor at a desired position by closing a subset of switches from the arrangement of switches within the power inverter to provide a circulatory current flow path within the power inverter such that in response to external movement of the rotor, the current flowing in the circulatory current flow path within the power inverter will generate an opposing force to oppose the movement of the rotor.

2. The method of claim 1, further comprising initially moving the rotor to the desired position, and then closing the subset of switches to lock the rotor at the desired position.

3. The method of claim 1 or 2, wherein the inverter comprises an upper branch, a lower branch, and a respective switch arm for each stator winding, each switch arm providing an output to its respective stator winding and including a respective top switch and a bottom switch, the top and bottom switches positioned on either side of the switch arm output, and wherein the subset of switches from the arrangement of switches within the power inverter that is closed to lock the rotor comprises the subset of top switches for each switch arm.

4. The method of claim 1 or 2, wherein the inverter comprises an upper branch, a lower branch, and a respective switch arm for each stator winding, each switch arm providing an output to its respective stator winding and including a respective top switch and a bottom switch, the top and bottom switches positioned on either side of the switch arm output, and wherein the subset of switches from the arrangement of switches within the power inverter that is closed to lock the rotor comprises the subset of bottom switches for each switch arm.

5. The method of any preceding claim, wherein the motor comprises a stator having a plurality of stator teeth around which the stator windings are mounted, and wherein the desired position at which the rotor is locked is a position where the rotor is aligned with at least one of the stator teeth.

6. An electric motor system comprising:
a motor comprising a rotor having a magnet mounted thereto;
an electric circuit that comprises one or more stator windings for driving rotation of the rotor when the stator windings receive an input voltage from an electrical power supply, the electric circuit further comprising an inverter comprising an arrangement of switches that can be selectively operated to control an operation of the electric motor system; and
a control circuit, wherein the control circuit is configured to, when it is desired to lock the rotor at a certain position:
close a subset of switches from the arrangement of switches within the power inverter to provide a circulatory current flow path within the power inverter such that in response to external movement of the rotor, the current flowing in the circulatory current flow path within the power inverter will generate an opposing force to oppose the movement of the rotor.

7. The system of claim 6, wherein when it is desired to lock the rotor, the control circuit is configured to initially move the rotor to the desired position, and then close the subset of switches to lock the rotor at the desired position

8. The system of claim 6 or 7, wherein the inverter comprises an upper branch, a lower branch, and a respective switch arm for each stator winding, each switch arm providing an output to its respective stator winding and including a respective top switch and a bottom switch, the top and bottom switches positioned on either side of the switch arm output, and wherein the subset of switches from the arrangement of switches within the power inverter that is closed to lock the rotor comprises the subset of top switches for each switch arm.

9. The system of claim 6 or 7, wherein the inverter comprises an upper branch, a lower branch, and a respective switch arm for each stator winding, each switch arm providing an output to its respective stator winding and including a respective top switch and a bottom switch, the top and bottom switches positioned on either side of the switch arm output, and wherein the subset of switches from the arrangement of switches within the power inverter that is closed to lock the rotor comprises the subset of bottom switches for each switch arm.

10. The system of any of claims 6 to 9, wherein the motor comprises a stator having a plurality of stator teeth around which the stator windings are mounted, and wherein the desired position at which the rotor is locked is a position where the rotor is aligned with at least one of the stator teeth.

11. An electric vertical take-off and landing (eVTOL) aircraft comprising one or more propellers arranged to provide thrust, wherein each of the one or more propellers is connected to an electric motor system as claimed in any of claims 6 to 10, the control circuit being operable to lock the propellers in a certain orientation.

12. The aircraft of claim 11, wherein during a flight phase of the aircraft, the control circuit is configured to lock at least one of the propellers at a certain orientation to reduce drag.

13. The aircraft of claim 11 or 12, comprising one or more lifter propellers arranged to rotate in a first plane to provide thrust in a first, vertical direction that is perpendicular to the first plane and at least one pusher propeller that is arranged to provide forward thrust for moving the aircraft in a second, forward direction that is parallel to the first plane, wherein during a flight phase where it is desired to propel the aircraft strictly in the second, forward direction, the control circuit is configured to lock the lifter propellers to reduce drag.

14. The aircraft of claim 13, wherein during the flight phase where it is desired to propel the aircraft strictly in the second, forward direction, the lifter propellers are locked with their blades aligned with the second, forward direction.

15. A non-transitory computer readable medium storing instructions that when executed by a processor cause the processor to perform a method as claimed in any of claims 1 to 5.
